# EUROPEAN PATENT SPECIFICATION

(11) **EP 0 345 297 B1**
(45) Date of publication and mention of the grant of the patent: **27.10.1993**
(21) Application number: 88902659.7
(22) Date of filing: 10.02.1988
(51) Int. Cl.: G02B 21/18, G02B 27/14

(54) **APERTURE IMAGE BEAM SPLITTER**
APERTUR-BILD-BÜNDELTEILER
DECOMPOSEUR DE FAISCEAU D'IMAGE D'OUVERTURE

(30) Priority: 11.02.1987 US 13584
(43) Date of publication of application: 13.12.1989
(73) Proprietor: Spectra-Tech, Inc., Stamford Connecticut 06906 (US)
(72) Inventor: MESSERSCHMIDT, Robert, G., Westport, CT 06880 (US); STING, Donald, W., New Canaan, CT 06840 (US)
(74) Representative: Cockbain, Julian, Dr.
(86) International application number: US8800468
(87) International publication number: WO8806301

(56) References cited:
- EP-A- 196 789
- DE-A- 2 628 551
- DE-A- 2 722 787
- DE-A- 2 727 787
- US-A- 3 585 281
- US-A- 4 531 054
- APPLIED OPTICS, vol. 22, no. 6, 15th March 1983, pages 886-887, Optical Society of America, New York, US; C.J.R. SHEPPARD et al.: "High resolution stereoscopic imaging"
- PATENT ABSTRACTS OF JAPAN, vol. 6, no. 27 (P-102)[905], 17th February 1982; & JP-A-56 147 114

## Description

The present invention relates to the field of microscopy and particularly the field of fast Fourier transform-infrared (FT-IR) microspectrophotometry.

U.S. Patent 4,653,880, titled Reflective Beam Splitting Objective (equivalent to EP-A-196789), discloses an aperture beam splitter formed entirely with mirror optics. The mirror optics can focus radiant energy having greatly differing wavelengths such as from the visible light region to the infrared. The beam splitter forms an integral unit with the imaging objective of the microscope. In the preferred embodiment, an intercepting mirror is positioned close to the secondary mirror of a Cassegrain reflective objective so as to divide in half the reflective surface of the secondary mirror. The intercepting mirror reflects half of a beam of incident radiant energy to the secondary so that energy from half of the aperture of the primary mirror forms an image at an image sample plane. The other half of the primary mirror collects the radiant energy from the surface of the sample. The arrangement of mirrors enables the reflective beam splitting objective to obtain a 50% throughput efficiency. Little if any of the image information about the sample is lost and the quality of the image is adequate for FT-IR microspectrophotometry.

The reflective beam splitting objective, unlike conventional aperture beam splitters, eliminates the complexity and expense associated with collimating optics. Rather than collimating the radiant energy, the reflecting beam splitting objective receives radiant energy that is either converging or diverging.

The foregoing aperture beam splitter has several disadvantages. The intercepting mirror must be positioned in a confined space within the focusing objective. The relatively small physical dimensions of a microscope objective severely limit the physical size of the intercepting mirror. Further, the confined physical space within the objective makes aligning the intercepting mirror most critical. The difficulty associated with obtaining and maintaining the alignment increases the cost of the objective beam splitter. The integral structure of the reflective beam splitting objective requires that each microscope objective contain a properly aligned intercepting mirror. Commercially available reflecting objectives therefore cannot be used without expensive modification.

It has been found that such microscope systems for spectroscopic analysis can be improved by placing an aperture beam splitter at an aperture stop in the system. Thus viewed from one aspect the invention provides a microscope for spectrophotometry comprising a radiant energy source and optics means arranged to direct an incident radiant energy beam from said source onto a sample, wherein said optics means is arranged to focus said incident beam at first and second sample image planes and at said sample, wherein said optics means includes an aperture image beam splitter positioned at an aperture stop between said first and second sample image planes and remote from any other sample image plane, and wherein said splitter comprises an intercepting mirror which is arranged to discard part of said incident radiant energy beam and to allow a remaining part of said incident radiant energy beam to pass through said second sample image plane to said sample and to transmit radiant energy reflected from said sample back through said second sample image plane to a detector.

Viewed from a further aspect the invention also provides a method of spectroscopic analysis of a sample, said method comprising the steps of:
directing incident radiant energy from a source to said sample;
focusing said incident radiant energy at at least first and second sample image planes and at said sample;
at an aperture stop between said first and second sample image planes and remote from any other sample image plane interrupting the optical path of said incident radiant energy to said second sample image plane to prevent a part of said incident radiant energy from passing to said second sample image plane;
directing radiant energy specularly reflected from said sample back towards said second and first sample image planes;
intercepting said specularly reflected radiant energy at said aperture stop; and
directing the intercepted specularly reflected radiant energy to a detector.

Thus in the microscope of the invention an intercepting mirror is positioned at an aperture image plane that is an aperture stop and is remote from any sample image. Part, preferably half, of the incident beam of radiant energy is lost at the aperture stop. The remaining energy supplies the input to an optical system. The output of that optical system eventually returns to an image plane corresponding to the aperture image plane. Preferably, the optical paths of the incident and returning radiant energy are sufficiently coincident in space that the aperture image plane returns to the intercepting mirror. If the optical system focuses the radiant energy an odd number of times, the aperture image experiences a mirror symmetry reversal. The energy that was retained in the optical system during the first pass through the aperture image plane fills the other half of the aperture image plane. Thus, the intercepting mirror can separate the beam of the incident radiant energy from the beam of returning radiant energy without additional loss of energy or loss of image information gained from an intervening focus.

The improved microscope according to the present invention retains the advantages of the above identified reflective beam splitting objective without requiring a critical positioning of the intercepting mirror. The greater tolerance reduces the cost of manufacturing the beam splitter and simplifies the task of obtaining and maintaining a proper optical alignment. Further, the aperture image beam splitter works with all commercially available condensers and objectives and thus eliminates the time and expense associated with inserting and aligning an intercepting mirror in each microscope objective.

The invention will now be further described with reference to the accompanying drawings in which:-
Figure 1 is a schematic illustration of a microscope system according to the present invention; and
Figure 2 shows the distribution and direction of propagation of the radiant energy forming the aperture image at the intercepting mirror in Figure 1.

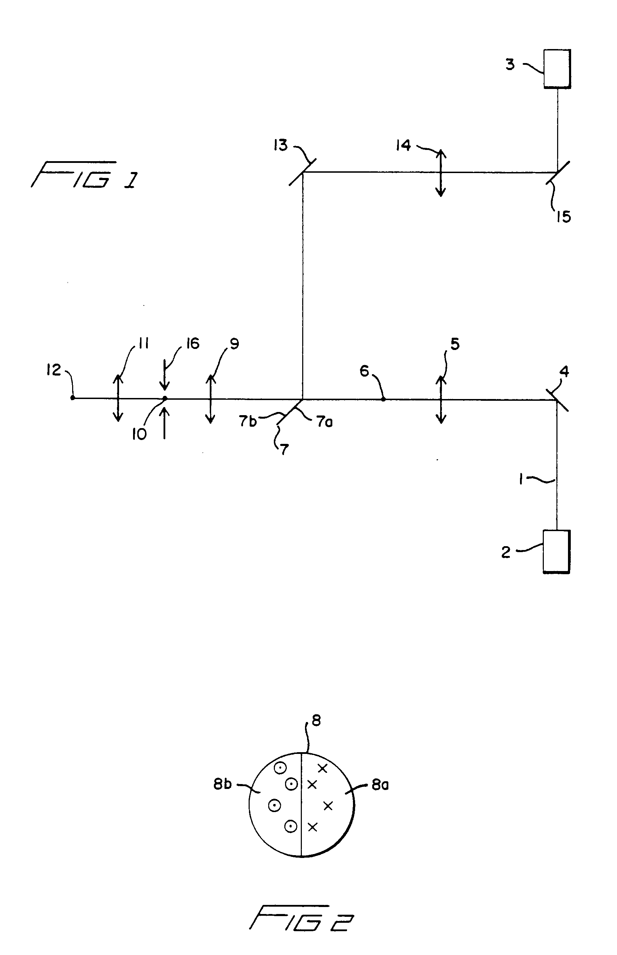

Figure 1 is a schematic illustration of a microscope system according to the present invention. A beam of radiant energy 1 emanates from a source 2 to a detector system 3. The source 2 and detector system 3 comprise parts of a Fourier transform-infrared (FT-IR) spectrophotometer, many examples of which are well known in the art. Transfer optics comprising mirror 4 reflect the radiant energy out of the sample compartment or "shoe box" of the spectrophotometer, not shown in Figure 1. Additional transfer optics, comprising one or more mirrors, lenses, or combinations thereof and symbolically illustrated by double arrow 5, focus the radiant energy at remote sample image 6. Half of the diverging beam of incident energy from remote sample image 6 fills surface 7a on intercepting mirror 7. Surface 7a discards the energy from the aperture image plane 6 by reflecting it to one side. The other half of the beam of incident energy passes by intercepting mirror 7.

Intercepting mirror 7 is positioned at what is defined for the purpose of the present description as an aperture image plane 8 which corresponds to a virtual image at the plane of intercepting mirror 7. Figure 2 shows the distribution of the radiant energy at the aperture image plane. The direction of the radiant energy is shown using conventional arrow head and arrow tail notation. The beam of incident radiant energy that passes by intercepting mirror 7 fills input region 8a. The direction of propagation direction into the paper in Figure 2 is indicated by the crosses symbolizing tails of the vector arrow.

An optical system, symbolically indicated by double arrow 11 in Figure 1, focuses the incident beam of radiant energy at a first sample image 12. The optical system may also include an additional set of optics symbolically indicated by double arrow 9 to image the radiant energy at an intermediate sample image 10 before and after optics 11 forms remote sample image 12. The imaging optics indicated by double arrows 9 and 11 may comprise one or more mirrors, lenses or combinations thereof. Mirror optics exhibit no chromatic aberration and are therefore preferred. The optical system formed by optics 9 and 11 preferably comprise a microscope for FT-IR microspectrophotometry.

As shown in Figure 1, optics 11 image the radiant energy reflected from a sample, not shown, at remote sample image 12 to the intermediate sample image 10. The radiant energy from the sample is reflected from remote sample image 12 through the optical system forms an aperture image 8b at the plane of mirror 7. The returning radiant energy is indicated as output 8b in Figure 2 by the dots and circles which symbolize the heads of arrows. The aperture images 8a and 8b are mirror images whenever the radiant energy is focused at an odd number of sample image planes before returning to aperture plane 8. This result, however, requires that the image information carried by the radiant energy is not scrambled or otherwise destroyed. The radiant energy in the returning beam from the sample fills the area of the aperture image plane from which energy was originally removed at surface 7a at intercepting mirror 7. a reflecting surface 7b, provided on the back side of mirror 7, reflects the beam of returning radiant energy from the aperture image to transfer optics comprising mirror 13. Additional transfer optics, comprising one or more mirrors, lenses or combinations thereof and symbolically represented by double arrow 14, modify the divergence of the returning beam of radiant energy so that it is reflected by mirror 15 to a focus at detector system 3.

Intercepting mirror 7 must be positioned at a location that is remote from any focus sample image plane of the optical system, such as remote sample image 6. Reflective surface 7a preferably corresponds to an aperture stop for the beam of incident radiant energy. The aperture image contains radiant energy from all the points of remote sample image 6 because intercepting mirror 7 only reduces the effective aperture of the system. The image information gained at any of the sample images is therefore not vignetted by the intercepting mirror. However, the intercepting mirror does reduce the brightness of each subsequent sample image focus. The numerical aperture, and hence the effective resolution of any subsequent focusing optics, is also reduced so long as the radiant energy continues to transmit the image of the intercepting mirror at the aperture image plane.

It is preferred that surface 7a of mirror 7 intercept exactly one half of the beam of radiant energy as shown in Figure 2. Intercepting more than one half of the radiant energy with mirror 7 is inefficient because radiant energy is wasted and the effective aperture is reduced. Conversely, intercepting less than one half of the radiant energy is also inefficient because the extra radiant energy cannot be directed to the detector on the return, thus reducing the effective numerical aperture of the optical system.

An intermediate sample image, such as sample image 10, may be masked with a variable aperture diaphragm or set of razor blades 16 to form an arbitrary geometric shape. The image of the mask is projected onto all other sample images in the optical system. The ability to mask an intermediate focus sample image and project the image of that remote sample image onto a sample is considered a major utility of the present invention in the field of FT-IR microspectrophotometry.

Numerous modifications may be made to the optical scene shown in Figure 1. For example, the reflectance mode microscope system shown in Figure 1 may be replaced by a transmissive mode microscope system. The intercepting mirror may reflect the beam of incident radiant energy into the optical system rather than reflect the beam of returning radiant energy to the detector as done in the embodiment shown in Figure 1. The intercepting mirror(s) may be positioned at any place in the optical path that is removed from a focus and preferably at an aperture stop. The intercepting mirror has no maximum size and may be positioned within comparatively wide tolerances. The wide tolerance greatly simplifies the process of aligning the intercepting mirror and reduce manufacturing costs while also maintaining the quality of the image. Additional transfer optics may be added to the optical system shown in Figure 1 to accomplish any number of objectives or to simplify any other mechanical alignments.

## Claims

1. A microscope for spectrophotometry comprising a radiant energy source (2) and optics means (4, 5, 7, 9, 11) arranged to direct an incident radiant energy beam (1) from said source onto a sample (12), wherein said optics means is arranged to focus said incident beam at first and second sample image planes (6, 10) and at said sample, wherein said optics means includes an aperture image beam splitter positioned at an aperture stop between said first and second sample image planes and remote from any other sample image plane, and wherein said splitter comprises an intercepting mirror (7) which is arranged to discard part of said incident radiant energy beam and to allow a remaining part of said incident radiant energy beam to pass through said second sample image plane (10) to said sample and to transmit radiant energy reflected from said sample back through said second sample image plane to a detector (3).

2. A microscope according to claim 1 wherein said aperture image beam splitter is semi-circular to discard one half of the incident radiant energy beam (1) while allowing the other half of the incident radiant energy beam to pass.

3. A microscope according to either of claims 1 and 2 wherein said optics means is arranged to form an odd number of sample images between said intercepting mirror (7) and said sample (12).

4. A microscope as claimed in any one of claims 1 to 3 further comprising an adjustable mask positioned at said second sample image plane (10).

5. A method of spectroscopic analysis of a sample, said method comprising the steps of:
directing incident radiant energy from a source (2) to said sample (12);
focusing said incident radiant energy at at least first and second sample image planes (6, 10) and at said sample;
at an aperture stop between said first and second sample image planes and remote from any other sample image plane interrupting the optical path of said incident radiant energy to said second sample image plane to prevent a part of said incident radiant energy from passing to said second sample image plane;
directing radiant energy specularly reflected from said sample back towards said second and first sample image planes;
intercepting said specularly reflected radiant energy at said aperture stop; and
directing the intercepted specularly reflected radiant energy to a detector (3).

## Patentansprüche

1. Mikroskop zur Spektrophotometrie, umfassend eine Strahlungsenergiequelle (2) und optische Mittel (4, 5, 7, 9, 11) die so angeordnet sind, daß sie ein einfallendes Strahlungsenergiebündel (1) von der Quelle auf eine Probe (12) leiten, wobei die optischen Mittel so angeordnet sind, daß sie den einfallenden Strahl an einer ersten und einer zweiten Probenbildebene (6, 10) und an der Probe fokussieren, wobei die optischen Mittel einen Apertur-Bildstrahlteiler enthalten, der an einer Apertur-Einstellposition zwischen der ersten und der zweiten Probenbildebene und beabstandet von jeder weiteren Probenbildebene angeordnet ist, und wobei der Teiler einen Abfangspiegel (7) umfaßt, der so angeordnet ist, daß er einen Teil des einfallenden Strahlungsenergiebündels ausblendet und den verbleibenden Teil des einfallenden Strahlungsenergiebündels über die zweite Probenbildebene (10) zur Probe passieren läßt und von der Probe reflektierte Strahlungsenergie über die zweite Probenbildebene zurück zu einem Detektor (3) leitet.

2. Mikroskop nach Anspruch 1, worin der Apertur-Bildstrahlteiler Halbkreisförmig ausgebildet ist, um eine Hälfte des einfallenden Strahlungsenergiebündels (1) auszublenden und gleichzeitig der anderen Hälfte des einfallenden Strahlungsenergiebündels ein Passieren zu ermöglichen.

3. Mikroskop nach einem der Ansprüche 1 bis 2, worin die optischen Mittel so angeordnet sind, daß sie eine ungerade Zahl von Abbildungen der Probe zwischen dem Abfangspiegel (7) und der Probe (12) erzeugen.

4. Mikroskop nach einem der Ansprüche 1 bis 3, welches zusätzlich eine einstellbare Maske umfaßt, die bei der zweiten Probenbildebene (10) positioniert ist.

5. Verfahren zur spektroskopischen Analyse einer Probe, wobei man bei diesem Verfahren:
einfallende Strahlungsenergie von einer Quelle (2) zu der Probe (12) leitet;
die einfallende Strahlungsenergie an wenigstens einer ersten und einer zweiten Probenbildebene (6, 10) und an der Probe fokussiert;
an einer Apertur-Einstellposition zwischen der ersten und der zweiten Probenbildebene und beabstandet von jeder weiteren Probenbildebene den Lichtweg der einfallenden Strahlungsenergie zu der zweiten Probenbildebene so unterbricht, daß der Durchgang eines Teils der einfallenden Strahlungsenergie zu der zweiten Probenbildebene unterbunden wird;
die von der Probe spiegelnd reflektierte Strahlungsenergie zurück zu der zweiten und der ersten Probenbildebene leitet;
die spiegelnd reflektierte Strahlungsenergie an der Apertur-Einstellposition abfängt; und
die abgefangene spiegelnd reflektierte Strahlungsenergie zu einem Detektor (3) leitet.

## Revendications

1. Microscope pour spectrophotométrie comprenant une source d'énergie rayonnante (2) et des moyens optiques (4, 5, 7, 9, 11) disposés pour diriger un faisceau incident (1) d'énergie rayonnante issue de cette source sur un échantillon (12) où ces moyens optiques focalisent ce faisceau incident en des premier et deuxième plans image (6, 10) de l'échantillon et sur cet échantillon et comprennent un séparateur de faisceau d'image d'ouverture situé à un diaphragme d'ouverture placé entre ces premier et deuxième plans image de l'échantillon et à distance de tout autre plan image de l'échantillon, et où ce séparateur comprend un miroir d'interception (7) qui est disposé pour écarter une partie de ce faisceau incident d'énergie rayonnante et pour laisser un reste de ce faisceau incident d'énergie rayonnante franchir ce deuxième plan image de l'échantillon (10) vers cet échantillon et pour renvoyer l'énergie rayonnante réfléchie par cet échantillon au travers de ce deuxième plan image de l'échantillon et vers un détecteur (3).

2. Microscope selon la revendication 1, caractérisé en ce que ce séparateur de faisceau d'image d'ouverture est demi-circulaire pour écarter une moitié du faisceau incident (1) d'énergie rayonnante tout en laissant passer l'autre moitié du faisceau incident d'énergie rayonnante.

3. Microscope selon l'une ou l'autre des revendications 1 et 2, où ces moyens optiques sont disposés pour donner un nombre impair d'images de l'échantillon entre ce miroir d'interception (7) et cet échantillon (12).

4. Microscope selon l'une quelconque des revendications 1 à 3, comprenant en outre un écran réglable placé dans ce deuxième plan image (10) de l'échantillon.

5. Procédé d'analyse spectroscopique d'un échantillon comprenant les étapes consistant à :
- diriger sur cet échantillon (12) une énergie rayonnante incidente issue d'une source (2) ;
- focaliser cette énergie rayonnante incidente en au moins un premier et un deuxième plans image (6, 10) de l'échantillon et sur cet échantillon ;
- interrompre le chemin optique de cette énergie rayonnante incidente vers ce deuxième plan image de l'échantillon à un diaphragme d'ouverture entre ces premier et deuxième plans image de l'échantillon et à distance de cet autre plan image de l'échantillon pour empêcher une partie de cette énergie rayonnante incidente de passer vers ce deuxième plan image de l'échantillon ;
- renvoyer l'énergie rayonnante réfléchie spéculairement pour cet échantillon vers ces deuxième et premier plans image de l'échantillon ;
- intercepter cette énergie rayonnante réfléchie spéculairement à ce diaphragme d'ouverture ; et
- diriger l'énergie rayonnante réfléchie spéculairement interceptée sur un détecteur (3).
